(19)

**Europäisches Patentamt**
**European Patent Office**
**Office européen des brevets**

(11) **EP 2 819 025 A1**

(12) **EUROPEAN PATENT APPLICATION**

(43) Date of publication:
**31.12.2014 Bulletin 2015/01**

(51) Int Cl.:
**G06F 17/16** *(2006.01)*      **G06F 17/17** *(2006.01)*

(21) Application number: **13173461.8**

(22) Date of filing: **24.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Université de Strasbourg**
  **67000 Strasbourg (FR)**
- **Centre National de la Recherche Scientifique**
  **75794 Paris Cedex 16 (FR)**
- **INSTITUT NATIONAL DE LA SANTE ET DE LA RECHERCHE MEDICALE**
  **75654 Paris Cedex 13 (FR)**

(72) Inventors:
- **Delsuc, Marc-André**
  **67540 OSTWALD (FR)**
- **Chiron, Lionel**
  **67000 STRASBOURG (FR)**

(74) Representative: **Novagraaf Technologies**
  **Bâtiment O2**
  **2 rue Sarah Bernhardt**
  **CS90017**
  **92665 Asnières-sur-Seine Cedex (FR)**

Remarks:
Amended claims in accordance with Rule 137(2) EPC.

(54) **Method for reducing noise in data-sets of harmonic signals**

(57) Method for reducing the noise in data-sets of harmonic signals comprising data vectors $X$ of length L, each data vector $X$ comprising P harmonic components, said method comprising the steps of:
- computing (100) a Hankel matrix H by applying the equation $(H_{ij})=(X_{i+j-1})$;
- estimating (200) a matrix Y by estimating the product of the Hankel matrix H by a matrix $\Omega$, said matrix $\Omega$ comprising a set of $K$ random unit vectors;
- computing (300) an orthogonal matrix $Q$ by performing a $QR$ decomposition on the matrix Y and then computing the conjugate and transpose matrix $Q^*$ of the orthogonal matrix $Q$;
- estimating (400) a $K$-ranked approximation $\tilde{H}$ of the Hankel matrix H;
- estimating (500) reduced noise data vectors $X$ from the estimated $K$-ranked approximation $\tilde{H}$ of the Hankel matrix H.

100 — Compute a Hankel matrix H

200 — Estimate a matrix Y by estimating the product of the Hankel matrix H by a matrix $\Omega$ comprising K random unit vectors

300 — Compute an orthogonal matrix Q by performing a QR decomposition on the matrix Y and compute the conjugate and transpose matrix Q* of the orthogonal matrix Q

400 — Estimate a K-ranked approximation $\tilde{H}$ of the Hankel matrix H

500 — Estimate reduced noise data vectors X

FIG. 1

**EP 2 819 025 A1**

**Description**

**Technical field of the invention**

The present invention relates generally to signal processing and more particularly to a method for reducing noise in data-sets of harmonic signals.

Many applications of the invention have been found, including, without being limited to, Fourier Transform Mass Spectroscopy for proteomics, metabolomics and petroleomics, Nuclear Magnetic Resonance (NMR) spectroscopy, seismology, image processing, telecommunications.

**Background art**

Noise reduction has been of major concern for signal processing over the last decades and various methods of performing noise reduction in data-sets of harmonic signals have been developed.

A well-known method which succeeds a significant noise reduction in data-sets of harmonic signals has been proposed by Cadzow in his publication *"Cadzow JA (1988), Signal enhancement: a composite property mapping algorithm, IEEE Trans. ASSP 36:49-62"*.

The method of Cadzow is based on the well-known autoregressive (AR) model.

Particularly, the autoregressive model assumes a harmonic signal being regularly sampled at time intervals $\Delta t$ and being represented as data vectors $X$, each data vector $X$ comprising $L$ data points $X_l$ and being composed of a sum of $P$ harmonic components. The autoregressive model also assumes that an exponential decay occurs for each harmonic component. Consequently, each data point $X_l$ follows the equation:

$$X_l = \sum_{k=1}^{P} \alpha_k (z_k)^l \quad \text{for } l \in [1..L] \quad \text{with } z_k = e^{(i\nu_k - \gamma_k)\Delta t}$$

$$(1)$$

wherein $\nu_k$ represent the frequencies of each harmonic component $P$, $\gamma_k$ represent the dampings occurring on each harmonic component $P$, $\alpha_k$ represent the complex amplitudes of each harmonic component $P$ and $L$ represents the length of each one of the data vectors $X$.

According to the autoregressive model, each data-point $X_l$ may be expressed as a linear combination of the $P$ preceding data points according to the following equation:

$$X_l = \sum_{k=1}^{P} \beta_k X_{k-l} \qquad (2)$$

wherein $\beta_k$ represent the parameters of the autoregressive model.

According to the autoregressive model, a MxN Hankel matrix $H$ is built based on the equation $(H_{ij})=(X_{i+j-1})$, and taking into consideration the above mentioned linear combination of the $P$ preceding harmonic components, it is implicit that the Hankel matrix $H$ is rank-limited to $P$ in the absence of noise.

However, in the case of noisy data-sets of harmonic signals, the Hankel matrix $H$ becomes full-rank because of the partial decorrelation of the data-points induced by the noise.

Cadzow proposed to perform singular value decomposition (SVD) on the matrix $H$ of the autoregressive model, and to further compute a matrix $\tilde{H}$ by truncating to the $K$ largest singular values $\sigma_k$ of the matrix $H$. Although the computed matrix $\tilde{H}$ is not Hankel-structured anymore, a reduced noise signal $\tilde{X}$ can be reconstructed by simply taking the average of all the anti-diagonals of the computed matrix $\tilde{H}$ according to the following equation:

$$\tilde{X}_l = \underset{i+j=l+1}{mean} (\tilde{H}_{ij})$$

$$(3)$$

However, the above mentioned singular value decomposition used in the Cadzow method imposes a very large computer burden both in terms of processing time (proportional to $L^3$ where $L$ is the length of the data vectors $X$) and in terms of computer memory footprint (proportional to $L^2$).

The problem resulting from the above mentioned computer burden is that the Cadzow method cannot be applied in the processing of large data-sets of harmonic signals.

Accordingly, there is a need of providing a method for reducing noise of large data-sets of harmonic signals.

**Summary of the invention**

It is an object of the invention to provide a method for reducing noise in large data-sets of harmonic signals.

This and other objects of the invention are achieved by a method which reduces the noise in data-sets of harmonic signals, which harmonic signals are regularly sampled at time intervals $\Delta t$ and comprise data vectors $X$ of length $L$, each data vector $X$ comprising $P$ harmonic components, the method comprising the steps of:

- computing a Hankel matrix $H$ by applying the equation $(H_{ij}) = (X_{i+j-1})$ ;

- estimating a matrix $Y$ by estimating the product of the Hankel matrix $H$ by a matrix $\Omega$, said matrix $\Omega$ comprising a set of $K$ random unit vectors;

- computing an orthogonal matrix $Q$ by performing a $QR$ decomposition on the matrix $Y$ and then computing the conjugate and transpose matrix $Q^*$ of the orthogonal matrix $Q$;

- estimating a $K$-ranked approximation $\tilde{H}$ of the Hankel matrix $H$;

- estimating reduced noise data vectors $X$ from the estimated $K$-ranked approximation $\tilde{H}$ of the Hankel matrix $H$.

In an embodiment, the estimation of the $K$-ranked approximation $\tilde{H}$ of the Hankel matrix $H$ is performed by estimating a first product of the conjugate and transpose matrix $Q^*$ of the orthogonal matrix $Q$ being multiplied by the Hankel matrix $H$ and by further estimating a second product of the result of the first product being multiplied by the orthogonal matrix $Q$;

In another embodiment, the estimation of the reduced noise data vectors $X$ is performed by computing a mean value of each antidiagonal of the estimated $K$-ranked approximation $\tilde{H}$ of the Hankel matrix $H$.

In another embodiment, the method comprises the steps of:

- computing instead of estimating a matrix $Y'$ as the product of the Hankel matrix $H$ by a matrix $\Omega$, said matrix $\Omega$ comprising a set of $K$ random unit vectors;

- computing instead of estimating a $K$-ranked approximation $\tilde{H}$ of the Hankel matrix $H$;

- computing instead of estimating reduced noise data vectors $X$ from the computed $K$-ranked approximation $\tilde{H}$ of the Hankel matrix $H$.

In an embodiment, the computation of the $K$-ranked approximation $\tilde{H}$ of the Hankel matrix $H$ is performed by projecting the Hankel matrix $H$ on the subspace defined by the column vectors of the matrix $Q$.

In an embodiment, the computation of the reduced noise data vectors $X$ is performed by computing a mean value of each antidiagonal of the computed $K$-ranked approximation $\tilde{H}$ of the Hankel matrix $H$.

In another embodiment, the rank $K$ is larger than the number of the $P$ components of the data vectors $X$.

In an embodiment, when the method is performed on more than one core of a computer, parallelizing the computation and/or estimation steps on the various cores of the computer.

In a particular embodiment, the orthogonal matrix $Q$ is shared by all cores.

In another embodiment, the product of the conjugate and transpose matrix $Q^*$ of the orthogonal matrix $Q$ by the Hankel matrix $H$ is shared by all cores.

In an embodiment, the method is applied in Fourier Transform Mass Spectroscopy (FTMS).

In another embodiment the method is applied in Nuclear Magnetic Resonance (NMR) spectroscopy.

In another embodiment, the method is applied in image processing.

In another embodiment, the method is applied in telecommunications.

The invention also achieves a computer program with a program code for performing, when the computer program is executed on a computer, a method for processing data-sets of harmonic signals according to the invention.

**Brief description of the drawings**

The above objects and characteristics of the present invention will be more apparent by describing several embodiments of the present invention in details with reference to the accompanying drawings, in which:

Figure 1 illustrates a flowchart of a method for reducing noise in data-sets of harmonic signals according to an embodiment of the invention.

Figure 2 illustrates a flowchart of a method for reducing noise in data-sets of harmonic signals according to another embodiment of the invention.

Figure 3 illustrates a diagram of processing time results provided by the application of the method of the embodiment of Figure 1, the method of the embodiment of Figure 2 and the prior art method of Cadzow.

Figure 4 illustrates a diagram of signal to noise ratio (SNR) gain results provided by the application of the method of the embodiment of Figure 1, the method of the embodiment of Figure 2 and the prior art method of Cadzow.

Figure 5 illustrates eight diagrams of intensity results provided by the application of the method of the embodiment of Figure 2 and the prior art method of Cadzow.

**Description of the embodiments of the invention**

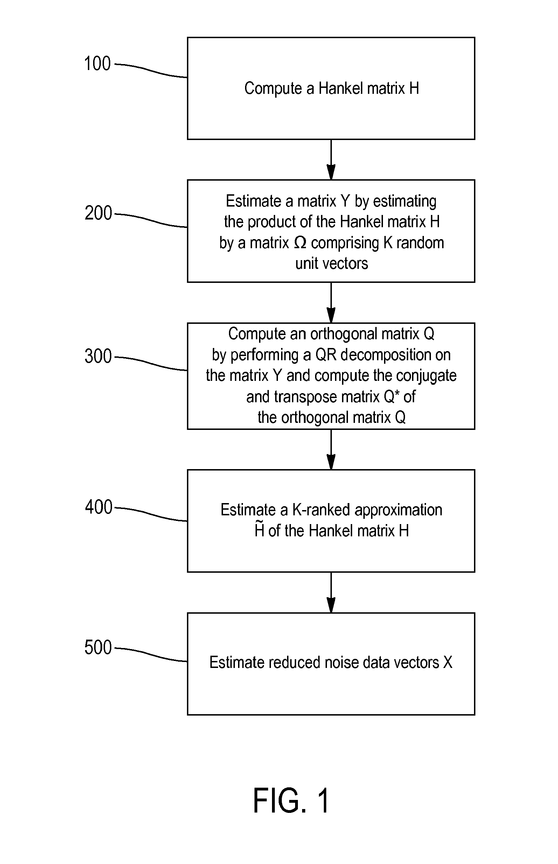

Figure 1 illustrates the steps of a method for reducing noise in data-sets of harmonic signals according to an embodiment of the invention.

Particularly, the harmonic signals being processed by the method of the embodiment of Figure 1 are regularly sampled at time intervals $\Delta t$ and are represented by data vectors $X$ of length $L$, wherein each data vector $X$ comprises $L$ data points $X_l$ and each data vector X is composed of a sum of $P$ harmonic components. Also, it is important to note that the method of the embodiment of Figure 1 satisfies the conditions of equations (1) and (2) of the autoregressive model being mentioned in the background art.

More particularly, in a step 100 of the above mentioned method, it is computed a Hankel matrix $H$ by applying the equation $(H_{ij}) = (X_{i+j-1})$.

The Hankel matrix $H$ may be defined herewith as a $MxN$ matrix and its computation is well known to the person skilled in the art.

In a step 200 of the method, it is estimated a matrix $Y$ by estimating the product of the $MxN$ Hankel matrix $H$ by a $NxK$ matrix $\Omega$. It is important to note that the $K$ columns of the matrix $\Omega$ comprise a set of $K$ random unit vectors and the relations $M+N-1=L$, $K<M$ and $M<N$, with $M$ chosen at will and K being on the order of $P$ or larger than $P$, are satisfied.

The estimation of the product of the Hankel matrix $H$ by the matrix $\Omega$ may be performed by applying the product estimation formula: $\dfrac{N}{N'}\sum_{i \in S_{N'}(N)} A_{m,i} B_{i,p}$,

wherein $S_{N'}(N)$ is a $N'$ out of $N$ random sampling with $N' < N$ and $A_{m,i}$, $B_{i,p}$ correspond to the elements of the product to be estimated.

Particularly, in order to perform the estimation of the product of the Hankel matrix $H$ by the matrix $\Omega$, the element $A_{m,i}$ of the product estimation formula is replaced by the matrix $H_{m,i}$ and the element $B_{i,p}$ of the product estimation formula is replaced by the matrix $\Omega_{i,p}$.

It is important to note that the estimated matrix $Y$ is a $MxK$ matrix since it results from the estimated product of the $MxN$ Hankel matrix $H$ by the $NxK$ matrix $\Omega$. Also, $K$ is always smaller than $N$ as a result of the relations $K<M$ and $M<N$ being mentioned in the step 200. Thus the estimated matrix $Y$ is always smaller than the Hankel matrix $H$.

In a step 300 of the method, it is computed an orthogonal matrix $Q$ by performing a $QR$ decomposition on the estimated matrix $Y$ and then it is computed the conjugate and transpose matrix $Q^*$ of the orthogonal matrix $Q$.

The performance of the $QR$ decomposition and the computation of the conjugate and transpose matrix $Q^*$ of the orthogonal matrix $Q$ are well known to the person skilled in the art.

In a step 400 of the method, it is estimated a $K$-ranked approximation $\tilde{H}$ of the Hankel matrix $H$ by estimating a first product of the conjugate and transpose matrix $Q^*$ of the orthogonal matrix $Q$ by the Hankel matrix $H$ and by further estimating a second product of the result of the first product by the orthogonal matrix $Q$;

Particularly, the above mentioned estimations of the first product and the second product may be performed by applying the above mentioned product estimation formula $\frac{N}{N'} \sum_{i \in S_{N'}(N)} A_{m,i} B_{i,p}$ for estimating each one of the above mentioned first product and second product.

In a step 500 of the method, it is estimated the reduced noise data vectors $X$ from the estimated $K$-ranked approximation $\tilde{H}$ of the Hankel matrix $H$.

Particularly, the estimation of the reduced noised data vectors $X$ may be performed by computing a mean value of each antidiagonal of the estimated $K$-ranked approximation $\tilde{H}$ of the Hankel matrix $H$.

The above mentioned mean value may be computed by applying the equation (3) mentioned in the background art on the estimated $K$-ranked approximation $\tilde{H}$ of the Hankel matrix $H$.

The method of the embodiment of Figure 1 has the advantage of reducing noise in large data-sets of harmonic signals in contrast to the prior art method of Cadzow which cannot be applied in large data-sets of harmonic signals.

The above mentioned advantage is a result of the three following factors.

The first factor is that both the method of the embodiment of Figure 1 and the method of Cadzow comprise a decomposition step (singular value decomposition for the method of Cadzow and $QR$ decomposition for the method of the embodiment of Figure 1). The $QR$ decomposition according to the method of the embodiment of Figure 1 is performed on the estimated matrix $Y$ which, as mentioned above, is always smaller than the Hankel matrix $H$. In contrast, the singular value decomposition in the method of Cadzow is performed on the Hankel matrix $H$. Thus, the QR decomposition in the method of the embodiment of Figure 1 is faster than the singular value decomposition in the method of Cadzow in terms of data processing time. Particularly, it is estimated that the QR decomposition step of the method of the embodiment of Figure 1 has a time dependence between $N^1$ and $N^2$ while the singular value decomposition step of the method of Cadzow has a time dependence between $N^2$ and $N^3$, with N being the size of the data-sets. Accordingly, because of the increased speed of the method of the embodiment of Figure 1, the latter may be used to reduce the noise in large data-sets of harmonic signals.

The second factor is that in the method of the embodiment illustrated in Figure 1, the Hankel matrix $H$ is used only in left and right matrix products and thus the method can be applied without storing the Hankel matrix $H$, the storage of which requires a large memory footprint. Thus, again the method of the embodiment of Figure 1 may be used to reduce the noise in large data-sets of harmonic signals.

The third factor is that the method of the embodiment illustrated in Figure 1 comprises the above mentioned estimation steps 200, 400 and 500 which actually estimate instead of computing the products of matrix multiplications performed in these steps, by applying the above mentioned product estimation formula. Accordingly, only a reduced number of matrix multiplications which is necessary for the above mentioned product estimations is performed, and thus the method of the embodiment of Figure 1 may be applied to reduce the noise in large data-sets of harmonic signals.

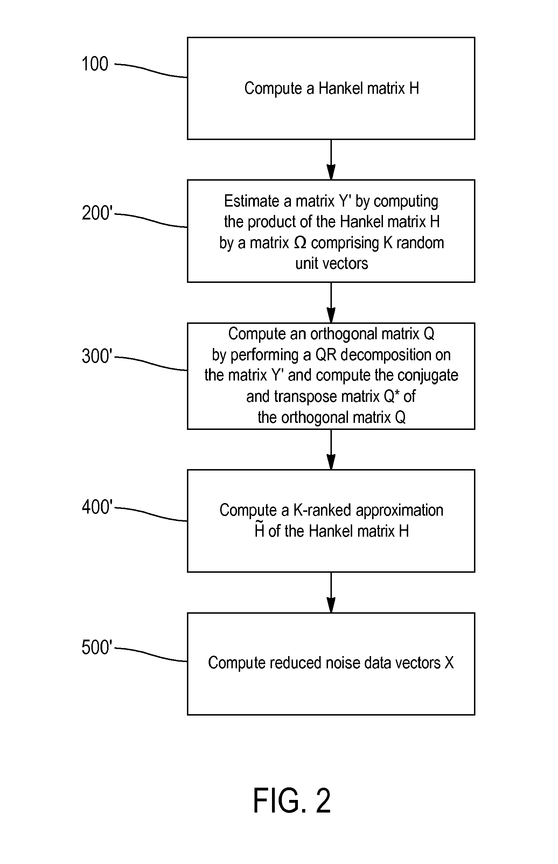

Figure 2 illustrates a flowchart of a method for reducing noise in data-sets of harmonic signals according to another embodiment of the invention.

Similarly to the method of the embodiment of Figure 1, the harmonic signals being processed by the method of the embodiment of Figure 2 are regularly sampled at time intervals $\Delta t$ and are represented by data vectors $X$ of length $L$, wherein each data vector $X$ comprises $L$ data points $X_l$ and each data vector X is composed of a sum of $P$ harmonic components. Also, it is important to note that the method of the embodiment of Figure 2 satisfies the conditions of equations (1) and (2) of the autoregressive model being mentioned in the background art.

Particularly, in a step 100 of the method of the embodiment of Figure 2, it is computed a $MxN$ Hankel matrix $H$ by applying the equation $(H_{ij}) = (X_{i+j-1})$ like in the step 100 of the embodiment of Figure 1.

In a step 200' of the method it is computed, instead of being estimated, a matrix $Y'$ as the product of the $MxN$ Hankel matrix $H$ by the $NxK$ matrix $\Omega$, said matrix $\Omega$ being the same as that defined in the method of the embodiment of Figure 1 with the columns $K$ of the matrix $\Omega$ comprising a set of $K$ random unit vectors and the relations $M+N-1=L$, $K<M$ and $M<N$, with $M$ chosen at will and K being on the order of $P$ or larger than $P$, being satisfied.

The computed matrix $Y'$ of the embodiment of Figure 2 differs from the estimated matrix $Y$ of the embodiment of Figure 1 only in that it is the result of a full computation of the product of the Hankel matrix $H$ by the matrix $\Omega$. This means that each one of the rows of the Hankel matrix $H$ is multiplied by each one of the columns of the matrix $\Omega$. In the step 200', no product estimation formula is applied as it is the case in the step 200 of the embodiment of Figure 1.

In a step 300' of the method, it is computed an orthogonal matrix $Q$ by performing a $QR$ decomposition on the computed matrix $Y'$ and it is then computed the conjugate and transpose matrix $Q^*$ of the orthogonal matrix $Q$, like in the step 300 of the embodiment of Figure 1.

In a step 400' of the method it is computed, instead of being estimated, a $K$-ranked approximation $\tilde{H}$ of the Hankel matrix $H$.

The computation of the $K$-ranked approximation $\tilde{H}$ of the Hankel matrix $H$ may be performed by projecting the Hankel matrix $H$ on the subspace defined by the column vectors of the orthogonal matrix $Q$.

More particularly, as it is known to the person skilled in the art, the projection of the Hankel matrix $H$ on the subspace defined by the column vectors of the orthogonal matrix Q is performed by the following equation:

$$H = QQ^*H,$$

More particularly, the matrix *H* is projected on a subspace defined by the matrix *Q* and the projection on this subspace expressed in the canonical basis is given by the product *QQ*H*.

In a step 500' of the method it is computed, instead of being estimated, the reduced noise data vectors *X* from the computed *K*-ranked approximation *H̃* of the Hankel matrix *H*.

The computation of the reduced noise data vectors *X* may be performed by computing a mean value of each antidiagonal of the computed *K*-ranked approximation *H̃* of the Hankel matrix *H*.

The above mentioned mean value may be computed by applying the equation (3) mentioned in the background art on the computed *K*-ranked approximation *H̃* of the Hankel matrix *H*.

The advantage of the method illustrated in the embodiment of Figure 2 is that it is faster and at the same time it presents a more robust noise reduction of the data vectors *X* than the prior art method of Cadzow.

The *QR* decomposition according to the embodiment of Figure 2 is performed on the computed matrix *Y* which, as mentioned above, is always smaller than the Hankel matrix *H*. In contrast, the singular value decomposition in the method of Cadzow is performed on the Hankel matrix *H*. Thus, the method illustrated in the embodiment of Figure 2 is faster than the method of Cadzow.

The method illustrated in the embodiment of Figure 2 is much more robust than Cadzow since the method according to the embodiment of Figure 2 is less a model-based approach. In the model-based approach a model is fitted on the data. This gives bad results if the model is seeking a number of frequencies not the same as the number of frequencies in the signal.

In the case of the method illustrated in the embodiment of Figure 2 the proximity to the data is always ensured while promoting the signal more than the noise by assuming that the signal is more weighted than the noise. The noise is also retrieved in homogeneously. In this way, no extraction from the noise subspace can be made mimicking a signal as it is the case for a model-based approach.

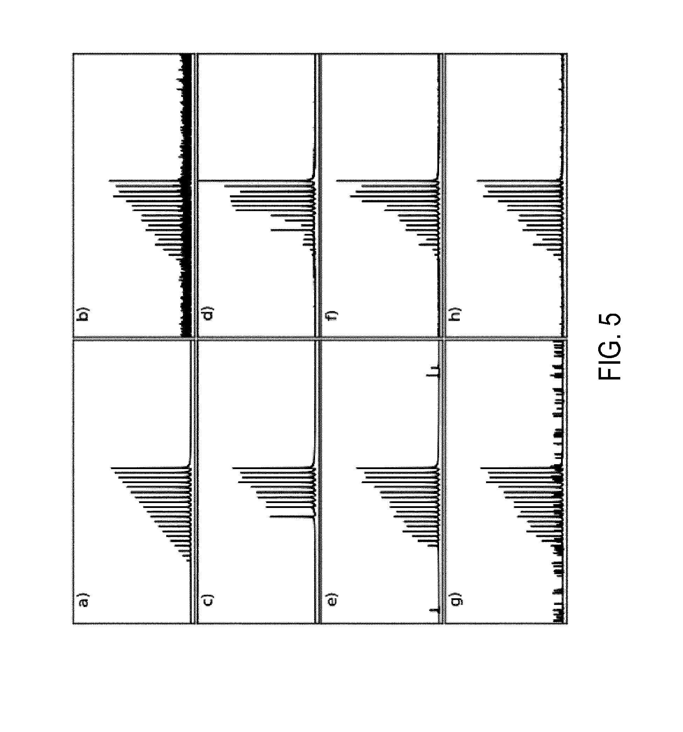

In an embodiment, the rank *K* of the *K*-ranked approximation *H̃* of the Hankel matrix *H* is larger than the number of the *P* components of the data vectors *X*. This has the advantage of providing a more robust noise reduction in the data-sets of harmonic signals, as it is referred below in the analysis of Figure 5.

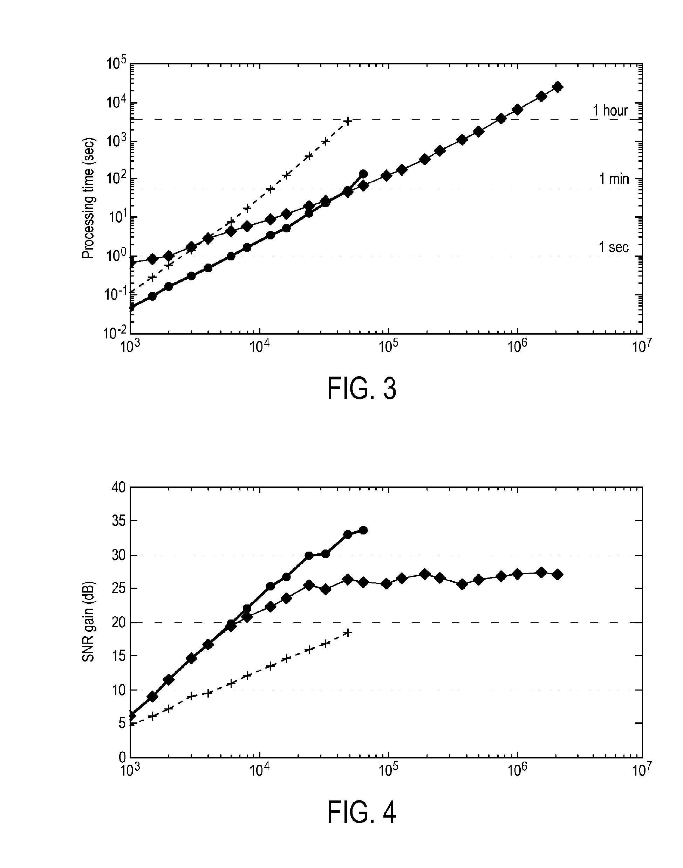

Figure 3 illustrates a diagram of processing time results provided by the application of the method of the embodiment of figure 1, the method of the embodiment of figure 2 and the prior art method of Cadzow, on a data-set containing eight frequencies. This data-set has been processed with *K*=100.

Particularly, the processing time results of the method of the embodiment of Figure 1 are illustrated by "squares", the processing time results of the method of the embodiment of Figure 2 are illustrated by "bullets" while the processing time results of the method of Cadzow are illustrated by "pluses".

As it can be seen in Figure 3, while the Cadzow method and the noise reduction method of the embodiment of Figure 2 are limited by the amount of computer memory available and do not process a data set larger than $10^5$ data points, the noise reduction method of the embodiment of Figure 1 has not such limit and may process a data set greater than $10^6$ data points.

The diagram of processing time results of Figure 3 was provided by using desktop computers with memory size according to the current technology. It is implicit that future desktop computers having larger memory size will be able to process larger data sets.

It is important to note that the values of diagram of Figure 3

Also, for the same size of data-sets it can be seen that the noise reduction method of the embodiment of Figure 1 is much faster than the Cadzow method. Particularly, the noise reduction method of the embodiment of Figure 1 for the same size of data-sets ($\cong 10^5$) lasts less than 1 minute while the Cadzow method lasts for about 1 hour.

Also, as it can be seen in Figure 3, the noise reduction method of the embodiment of Figure 2 is much faster than the Cadzow method for the same size of data-sets. Particularly, the noise reduction method of the embodiment of Figure 2 for the same size of data-sets ($\cong 10^5$) lasts less than 1 minute while the Cadzow method lasts for about 1 hour.

Figure 4 illustrates a diagram of signal to noise ratio (SNR) gain results provided by the application of the method of the embodiment of figure 1, the method of the embodiment of figure 2 and the prior art method of Cadzow, on a data-set containing eight frequencies. This data-set has been processed with a rank *K*=100 and comprises eight harmonic components.

Particularly, the signal to noise ratio (SNR) gain results of the method of the embodiment of Figure 1 are illustrated by "squares", the signal to noise ratio gain results of the method of the embodiment of Figure 2 are illustrated by "bullets" while the signal to noise ratio gain results of the method of Cadzow are illustrated by "pluses".

As it can be seen in Figure 4, the method of the embodiment of Figure 2 presents important SNR gains with values over 30 dB. In contrast, the SNR gain of the Cadzow method is less than 20 dB. Furthermore, the SNR gain of the method of the embodiment of Figure 1 is also higher (over 25 dB) than the SNR gain of the Cadzow method.

Figure 5 illustrates eight diagrams (a-h) of signal intensity results provided by the application of the method of the embodiment of Figure 2 and of the prior art method of Cadzow on a data-set of varying intensity.

Particularly, diagram (a) of Figure 5 illustrates a Fourier transform of an initial data-set composed of 20 lines of varying intensity corresponding to the components $P$ of the data vectors $X$. Diagram (b) of Figure 5 illustrates a Fourier transform of the initial data-set with an added Gaussian white noise. Diagrams (c), (e) and (g) illustrate a Fourier transform of the noise reduction processing of the added noise data-set of diagram (b) by applying the Cadzow method. Diagrams (d), (f) and (h) illustrate a Fourier transform of the noise reduction processing of the added noise data-set of diagram (b) by applying the method of the embodiment of Figure 2. Particularly, the rank $K$ is equal to 10 in the diagrams (c) and (d), the rank $K$ is equal to 20 in the diagrams (e) and (f) while the rank $K$ is equal to 100 in the diagrams (g) and (h).

As it can be seen in Figure 5, the most robust noise reduction performed on the added noise data-set (see diagram (b)) is provided by the application of the embodiment of Figure 2 with a rank $K$ larger than the number of the intensity lines of the data-sets and particularly when the rank $K$ is equal to 100. It is important to note that when the rank $K$ is equal ($K=20$) or smaller ($K=10$) than the number of the intensity lines of the data-set which as mentioned above are twenty, the noise reduction performed on the added noise data-set of diagram (b) is not satisfying.

In an embodiment, the method for processing data-sets of harmonic signals is performed on more than one processor cores of a computer. Particularly, the computation and/or estimation steps are parallelized on the various processor cores of the computer.

In a particular embodiment, the orthogonal matrix $Q$ being computed by the $QR$ decomposition performed by the method for processing data-sets of harmonic signals is shared by all processor cores.

In an embodiment, the method for processing data-sets of harmonic signals is applied in Fourier Transform Mass Spectroscopy (FTMS). FTMS measures the frequencies of ions orbiting in an electric or in a magnetic field and therefore knows a growing interest, in particular for proteomics, metabolomics and petroleomics.

In another embodiment, the method for processing data-sets of harmonic signals is applied in Nuclear Magnetic Resonance (NMR) spectroscopy.

In another embodiment, the method for processing data-sets of harmonic signals is applied in image processing.

In another embodiment, the method for processing data-sets of harmonic signals is applied in telecommunications.

In another embodiment, the method for processing data-sets of harmonic signals is applied in seismology.

In an embodiment, a computer program may be used with a program code for performing, when the computer program is executed on a computer, the method for processing data-sets of harmonic signals.

The algorithm of the product estimation formula $\frac{N}{N'}\sum_{i \in S_{N'}(N)} A_{m,i}B_{i,p}$ applied to the estimation steps of the method of the embodiment of Figure 1 is the following:

```
Require: A, B, N'
Require: Function S : N, N' ↦ S : N' element randomly sampled in [1..N] (N' < N)
    function PRODAPPROX(A, B, N')
        M, N ← SIZE(A)
        N, P ← SIZE(B)
        S ← S(N, N')
        for m ← 1, M do
            for p ← 1, P do
                R_{m,p} ← (N/N') ∑_{i∈S} A_{m,i}B_{i,p}
            end for
        end for
        return R
    end function
```

The algorithm corresponding to the method of the embodiment of Figure 1 is the following:

```
Require: X, M < length(X)/2   K < M
Require: Function RANDOM : n, p ↦ Ω                    ▷ a ~ N(0,1) n × p matrix
Require: Function PRODAPPROX A, B, N' ↦ C ≈ AB
Require: Function H : X ↦ H   with H_{i,j} = X_{i+j-1}
Require: Function QR : A ↦ Q, R                        ▷ the QR decomposition of A
Require: Function S : N, N' ↦ S : N' element randomly sampled in [1..N] (N' < N)
    L ← LENGTH(X)
    N ← L - M + 1
    Ω ← RANDOM(N, K)
    Y ← PRODAPPROX(H(X), Ω, 200) ▷ chosen approximation has no impact on the final
    result
    (Q, R) ← QR(Y)
    T ← PRODAPPROX(Q*, H(X), N')                       ▷ computes and store Q*H
    S ← S(M, N'')                                      ▷ returns a N'' out of L random sampling
    for l ← 1, L do
        X̃_l ← ( PRODAPPROX(Q, T, N')_{i,j})_{i+j=l+1, i,j∈s}
    end for
    return X̃
```

The algorithm corresponding to the method of the embodiment of Figure 2 is the following:

```
Require: X, K, M   M < length(X)/2, K < M
Require: Function RANDOM : n, p ↦ Ω                    ▷ a ~ N(0,1) n × p matrix
Require: Function QR : A ↦ Q, R                        ▷ the QR decomposition of A
    L ← LENGTH(X)
    N ← L - M + 1
    for i ← 1, M do
        for j ← 1, N do
            H_{ij} ← X_{i+j-1}                         ▷ H is a (M, N) matrix
        end for
    end for
    Ω ← RANDOM(N, K)
    Y ← Ω × H
    (Q, R) ← QR(Y)
    H ← Q × Q* × H
    for l ← 1, L do
        X̃_l ← (H_{ij})_{i+j=l+1}
    end for
    return X̃
```

## Claims

1.  Method for reducing the noise in data-sets of harmonic signals, said harmonic signals being represented as data vectors $X$ of length $L$, each data vector $X$ comprising $P$ harmonic components, said method comprising the steps of:

    - computing (100) a Hankel matrix $H$ by applying the equation $(H_{ij}) = (X_{i+j-1})$;
    - estimating (200) a matrix $Y$ by estimating the product of the Hankel matrix $H$ by a matrix $\Omega$, said matrix $\Omega$ comprising a set of $K$ random unit vectors;
    - computing (300) an orthogonal matrix $Q$ by performing a $QR$ decomposition on the matrix $Y$ and then computing the conjugate and transpose matrix $Q^*$ of the orthogonal matrix $Q$;
    - estimating (400) a $K$-ranked approximation $\tilde{H}$ of the Hankel matrix $H$;
    - estimating (500) reduced noise data vectors $X$ from the estimated $K$-ranked approximation $\tilde{H}$ of the Hankel matrix $H$.

2.  Method according to claim 1, wherein the estimation of the $K$-ranked approximation $\tilde{H}$ of the Hankel matrix $H$ is performed by:

    - estimating a first product of the conjugate and transpose matrix $Q^*$ of the orthogonal matrix $Q$ by the Hankel matrix $H$
    - and by further estimating a second product of the result of the first product by the orthogonal matrix $Q$;

3. Method according to claim 2, wherein the estimation of the reduced noise data vectors *X* is performed by computing a mean value of each antidiagonal of the estimated *K*-ranked approximation $\tilde{H}$ of the Hankel matrix *H*.

4. Method according to claim 1, comprising the steps of:

- computing instead of estimating a matrix *Y'* as the product of the Hankel matrix *H* by a matrix Ω, said matrix Ω comprising a set of *K* random unit vectors;
- computing instead of estimating a *K*-ranked approximation $\tilde{H}$ of the Hankel matrix *H*;
- computing instead of estimating reduced noise data vectors *X* from the computed *K*-ranked approximation $\tilde{H}$ of the Hankel matrix *H*.

5. Method according to claim 4, wherein the computation of the *K*-ranked approximation $\tilde{H}$ of the Hankel matrix *H* is performed by projecting the Hankel matrix *H* on the subspace defined by the column vectors of the matrix *Q*.

6. Method according to claim 5, wherein the computation of the reduced noise data vectors *X* is performed by computing a mean value of each antidiagonal of the computed *K*-ranked approximation $\tilde{H}$ of the Hankel matrix *H*.

7. Method according to any one of the preceding claims, wherein the rank *K* is larger than the number of the *P* components of the data vectors *X*.

8. Method according to any one of the preceding claims, wherein, when the method is performed on more than one core of a computer, parallelizing the computation and/or estimation steps on the various cores of the computer.

9. Method according to claim 8, wherein the orthogonal matrix *Q* is shared by all cores.

10. Method according to claim 8, wherein the product of the conjugate and transpose matrix *Q** of the orthogonal matrix *Q* by the Hankel matrix *H* is shared by all cores.

11. Method according to any one of claims 1 to 10 being applied in Fourier Transform Mass Spectroscopy (FTMS).

12. Method according to any one of claims 1 to 10 being applied in Nuclear Magnetic Resonance (NMR) spectroscopy.

13. Method according to any one of claims 1 to 10 being applied in image processing.

14. Method according to any one of claims 1 to 10 being applied in telecommunications.

15. A computer program with a program code for performing, when the computer program is executed on a computer, a method for processing data-sets of harmonic signals according to anyone of the preceding claims.

**Amended claims in accordance with Rule 137(2) EPC.**

1. Method being performed on a computer for reducing the noise in large data-sets of harmonic signals comprising more than $10^5$ points, said harmonic signals being represented as data vectors *X* of length *L*, each data vector *X* comprising *P* harmonic components, said method comprising the steps of:

- computing (100) a Hankel matrix *H* by applying the equation $(H_{ij})=(X_{i+j-1})$;
- estimating (200) a matrix *Y* by estimating the product of the Hankel matrix *H* by a matrix Ω, said matrix Ω comprising a set of *K* random unit vectors;
- computing (300) an orthogonal matrix *Q* by performing a *QR* decomposition on the matrix *Y* and then computing the conjugate and transpose matrix *Q** of the orthogonal matrix *Q*;
- estimating (400) a *K*-ranked approximation $\tilde{H}$ of the Hankel matrix *H*;
- estimating (500) reduced noise data vectors *X* from the estimated *K*-ranked approximation $\tilde{H}$ of the Hankel matrix *H*.

2. Method according to claim 1, wherein the estimation of the *K*-ranked approximation $\tilde{H}$ of the Hankel matrix *H* is performed by:

- estimating a first product of the conjugate and transpose matrix $Q^*$ of the orthogonal matrix $Q$ by the Hankel matrix $H$
- and by further estimating a second product of the result of the first product by the orthogonal matrix $Q$;

3. Method according to claim 2, wherein the estimation of the reduced noise data vectors $X$ is performed by computing a mean value of each antidiagonal of the estimated $K$-ranked approximation $\tilde{H}$ of the Hankel matrix $H$.

4. Method according to claim 1, comprising the steps of:

- computing instead of estimating a matrix $Y'$ as the product of the Hankel matrix $H$ by a matrix $\Omega$, said matrix $\Omega$ comprising a set of $K$ random unit vectors;
- computing instead of estimating a $K$-ranked approximation $\tilde{H}$ of the Hankel matrix $H$;
- computing instead of estimating reduced noise data vectors $X$ from the computed $K$-ranked approximation $H$ of the Hankel matrix $H$.

5. Method according to claim 4, wherein the computation of the $K$-ranked approximation $\tilde{H}$ of the Hankel matrix $H$ is performed by projecting the Hankel matrix $H$ on the subspace defined by the column vectors of the matrix $Q$.

6. Method according to claim 5, wherein the computation of the reduced noise data vectors $X$ is performed by computing a mean value of each antidiagonal of the computed $K$-ranked approximation $\tilde{H}$ of the Hankel matrix $H$.

7. Method according to any one of the preceding claims, wherein the rank $K$ is larger than the number of the $P$ components of the data vectors $X$.

8. Method according to any one of the preceding claims, wherein, when the method is performed on more than one core of a computer, parallelizing the computation and/or estimation steps on the various cores of the computer.

9. Method according to claim 8, wherein the orthogonal matrix $Q$ is shared by all cores.

10. Method according to claim 8, wherein the product of the conjugate and transpose matrix $Q^*$ of the orthogonal matrix $Q$ by the Hankel matrix $H$ is shared by all cores.

11. Method according to any one of claims 1 to 10 being applied in Fourier Transform Mass Spectroscopy (FTMS).

12. Method according to any one of claims 1 to 10 being applied in Nuclear Magnetic Resonance (NMR) spectroscopy.

13. Method according to any one of claims 1 to 10 being applied in image processing.

14. Method according to any one of claims 1 to 10 being applied in telecommunications.

15. A computer program with a program code for performing, when the computer program is executed on a computer, a method for processing data-sets of harmonic signals according to anyone of the preceding claims.

100 —— Compute a Hankel matrix H

200 —— Estimate a matrix Y by estimating
the product of the Hankel matrix H
by a matrix Ω comprising K random
unit vectors

300 —— Compute an orthogonal matrix Q
by performing a QR decomposition on
the matrix Y and compute the conjugate
and transpose matrix Q* of
the orthogonal matrix Q

400 —— Estimate a K-ranked approximation
$\tilde{H}$ of the Hankel matrix H

500 —— Estimate reduced noise data vectors X

FIG. 1

100 — Compute a Hankel matrix H

200' — Estimate a matrix Y' by computing the product of the Hankel matrix H by a matrix Ω comprising K random unit vectors

300' — Compute an orthogonal matrix Q by performing a QR decomposition on the matrix Y' and compute the conjugate and transpose matrix Q* of the orthogonal matrix Q

400' — Compute a K-ranked approximation $\tilde{H}$ of the Hankel matrix H

500' — Compute reduced noise data vectors X

# FIG. 2

FIG. 3

FIG. 4

FIG. 5

Europäisches
Patentamt

European
Patent Office

Office européen
des brevets

# EUROPEAN SEARCH REPORT

Application Number

EP 13 17 3461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VICENTE OROPEZA AND MAURICIO SACCHI: "Simultaneous seismic data denoising and reconstruction via multichannel singular spectrum analysis", GEOPHYSICS, SOCIETY OF EXPLORATION GEOPHYSICISTS, US, vol. 76, no. 3, 28 April 2011 (2011-04-28), pages V25-V32, XP001574355, ISSN: 0016-8033, DOI: 10.1190/1.3552706 [retrieved on 2011-04-28] * sections: Introduction, Theory (MSSA) * ----- | 1-15 | INV. G06F17/16 G06F17/17 |
| Y | N Halko ET AL: "FINDING STRUCTURE WITH RANDOMNESS: PROBABILISTIC ALGORITHMS FOR CONSTRUCTING APPROXIMATE MATRIX DECOMPOSITIONS Part I: Introduction", arXiv:0909.4061, 14 December 2010 (2010-12-14), pages 1-74, XP055085998, Retrieved from the Internet: URL:http://www.csc.kth.se/~olofr/NLA/Halko MartinssonTropp.pdf [retrieved on 2013-10-30] * sections 1.2-1.4; 2.1.2, 2.1.5; 4 * ----- | 1-15 | |
| Y | Alex Gittens: "Randomized low-rank approximations in theory and practice", ILAS 2013, Randomized Matrix Algorithms Minisymposium, 4 June 2013 (2013-06-04), pages 1-48, XP055085573, Retrieved from the Internet: URL:http://users.cms.caltech.edu/~gittens/ gittens-ilas2013-talk.pdf [retrieved on 2013-10-28] * page 5 - page 8 * * pages 23, 26, * * pages 27, 28 - page 30 * ----- | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 30 October 2013 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CADZOW JA.** Signal enhancement: a composite property mapping algorithm, IEEE Trans. *ASSP,* 1988, vol. 36, 49-62